# EUROPEAN PATENT APPLICATION

(11) **EP 1 365 176 A2**
(43) Date of publication of application: **26.11.2003**
(21) Application number: 03011768.3
(22) Date of filing: 23.05.2003
(51) Int. Cl.: F16H 57/02, F16D 23/12

(54) **Motor driving device**

(30) Priority: 23.05.2002 JP 2002149504
(71) Applicant: Aisin Seiki Kabushiki Kaisha, Kariya-shi, Aichi-ken (JP)
(72) Inventor: Suzuki, Shuuetsu, Gamagoori-shi, Aichi-ken (JP)
(74) Representative: Leson, Thomas Johannes Alois, Dipl.-Ing.

(57) **Abstract**

A motor driving device includes a housing (2), a motor (7) fixed to the housing, a shaft (5) having a worm gear (4) and driven by the motor, a worm wheel (3) rotatably disposed In the housing and geared with the worm gear, an engaging member (8) provided on a part of the worm wheel, a stopper (9) for contacting to the engaging member when the worm wheel rotates with a predetermined angle and for regulating the rotation of the worm wheel and an absorbing member (12,15) for absorbing a shock force in the axial direction of the shaft, wherein the shaft Is movable in the axial direction.

## Description

### FIELD OF THE INVENTION

This invention generally relates to a motor driving device which Includes a worm gear and a worm wheel.

### BACKGROUND OF THE INVENTION

A known motor driving device has been disclosed, for example, In a Japanese Laid-open Patent Publication No. 4-231727. This motor driving device has a structure including a worm gear and a worm wheel which the load applied to an output side does not influence a driving side. In this device, the worm gear is provided on an output shaft of a motor and the worm wheel geared with the worm gear is rotated by a driving force of the motor for operating a clutch of a automobile.

In the above prior device, when the rotation of the worm wheel Is regulated and is stopped, inertia weight of the rotational part of the driving side between the output shaft of the motor and the worm wheel acts on and thereby a gear lock generates between the worm gear and the worm wheel.

### SUMMARY OF THE INVENTION

In Is an object of the present invention to provide an improved motor gear device which can prevent the generation of the gear lock.

In order to achieve the objective, there is provided an Improved motor driving device which Includes a housing, a motor fixed to the housing, a shaft having a worm gear and driven by the motor, a worm wheel rotatably disposed in the housing and geared with the worm gear, an engaging member provided on a part of the worm wheel, a stopper for contacting to the engaging member when the worm wheel rotates with a predetermined angle and for regulating the rotation of the worm wheel and an absorbing member for absorbing a shock force in the axial direction of the shaft, wherein the shaft is movable in the axial direction.

### BRIEF DESCRIPTION OF THE DRAWING FIGURES

The foregoing and additional features and characteristics of the present Invention will become more apparent from the following detailed description considered with reference to the accompanying drawing figures wherein:
Fig.1 is a schematic illustration of a motor driving device according to an embodiment of the present invention;
Fig.2 is a cross sectional view taken along the line A-A of Fig.;
Fig.3 is a partly cross sectional view of a motor driving part of the embodiment of the present invention;
Fig.4 is a partly enlarged view of a portion shown by a dotted line in Fig. 3; and
Fig.5 is a schematic Illustration of a motor driving device in which the rotation of the worm wheel is regulated.

### DETAILED DESCRIPTION OF THE INVENTION

An embodiment of the present invention is explained below. In this embodiment, the present invention is applied to an automated clutch device. However, the present Invention can be applied to other motor driven device such as a window regulator and so on.

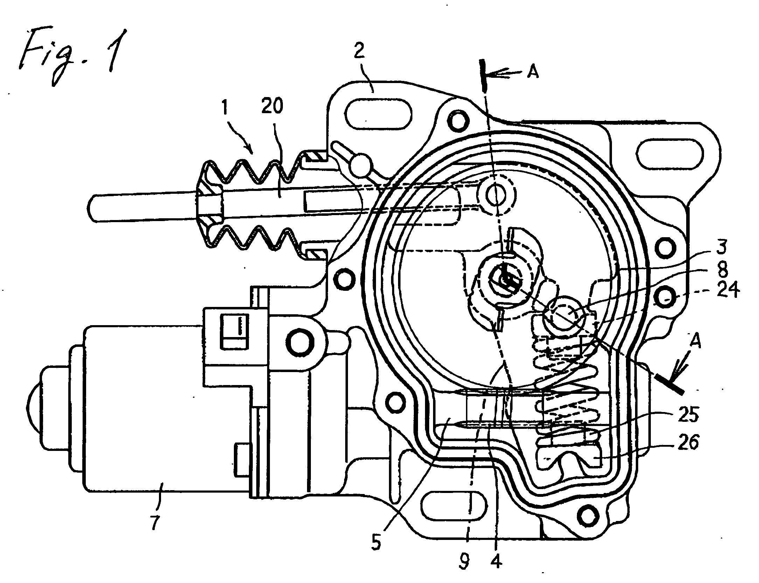

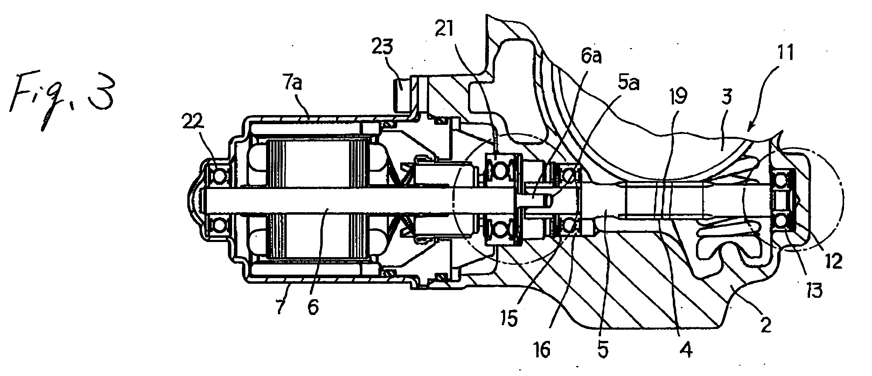

In Fig. 1, a motor driving device 1 includes a housing 2 and a motor 7 Is mounted on the housing 2. A disc shaped worm wheel 3 is disposed in the housing 2. As shown in a lower part of Fig. 1, the worm wheel 3 is geared with a worm gear 4. The worm gear 4 Is formed on a shaft 5 and the driving force of the motor 7 is transmitted to the worm wheel 3. A motor shaft 5 is disposed so as to be coaxial with the worm gear 4 on the shaft 5 (see Fig. 3).

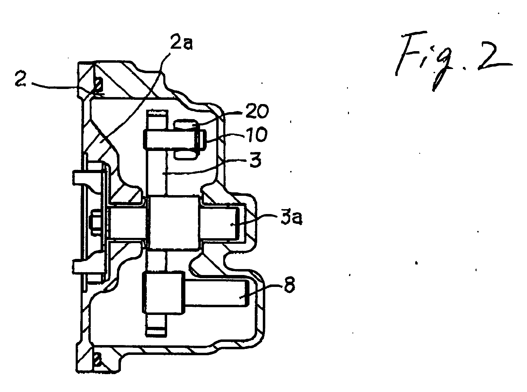

As shown In Fig. 2, a shaft 3a penetrates perpendicularly the center of the worm wheel 3. The worm wheel 3 is rotatably supported on bearing portions formed on the housing 2 and a housing cover 2a by the shaft 3a. Two pins 8, 10 which extend in parallel with the axial direction of the worm wheel 3 are fixed to the worm wheel 3. The pin 8 whose length is longer than that of the pin 10 can contact with a stopper 9 (a rotation regulating wall) formed on the housing 2 for regulating the rotation of the worm wheel 3 when the worm wheel 3 Is rotated. The pin 8 corresponds to an engaging member of the present invention. A connecting rod 20 is connected to the pin 10 and has a function which converts the rotational movement Into the linear movement transmitted to the output side.

In Fig. 3, bearings 13, 16 which are movable in the axial direction are provided on both ends of the shaft 5. Corn springs or plate springs 13, 16 are disposed outside of both ends of the shaft 5 and bend for absorbing the axial force applied to the shaft 5 when the axial force Is applied to the shaft 5. Each of the corn springs 12, 15 corresponds to an absorbing member of the present invention. A projection 6a which has a pair of parallel flat faces on the outer circumference is formed on one end of the motor shaft 6 and a groove 5a which has a pair of parallel flat faces on the inner circumference is formed on one end of the shaft 5. The groove 5a corresponds to the projection 6a and the projection 6a Is fitted into the groove 5a so as to be able to move in the axial direction. One end of the motor shaft 6 is supported on a bearing 22 supported on a motor case 7a and the other end of the motor shaft 6 is supported on a bearing 21 fitted into the housing 2. The motor 7 is fixed to the housing 2 by bolts 23 through the motor case 7a. The numeral 19 shows a gearing face 19 between the worm gear 4 and the worm wheel 3.

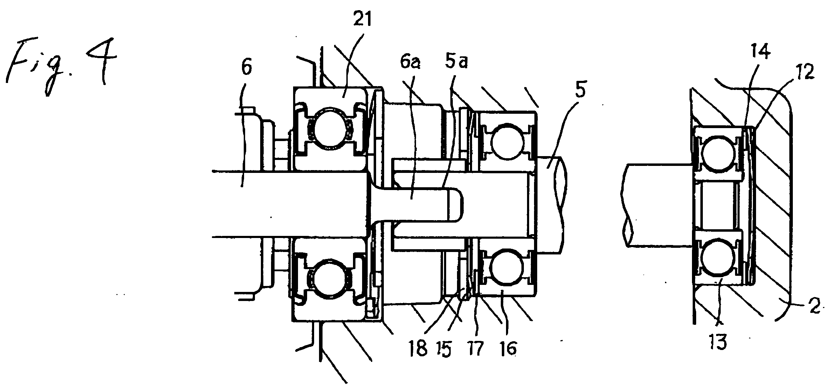

In Fig. 4, since the corn springs 12, 15 are smaller In side than the bearings 13, 14, the corn springs 12, 15 is disposed in a small space in which the bearings 13, 16 are disposed, respectively. The corn spring 15 Is disposed In a space between a ring 17 and a spacer 18 which are disposed at a side of the bearing 16 and the corn spring 12 Is disposed In a space between the housing 2 and a ring 14 which is disposed at a side of the bearing 13. The corn springs 12, 15 can expand and contract in the axial direction of the shaft 5. The outer diameter of each of the outer race of the bearings 13, 16 Is set so that a proper slight clearance is maintained with respect to the inner diameter of the housing 2, namely the bearings 13, 16 are loosely fitted Into the housing 2 and can move in the axial direction of the shaft 5. Accordingly, in the condition which the axial force is not applied to the shaft 5, the shaft 5 is pushed by the corn springs 12, 15 and is maintained at the balanced position by the spring forces.

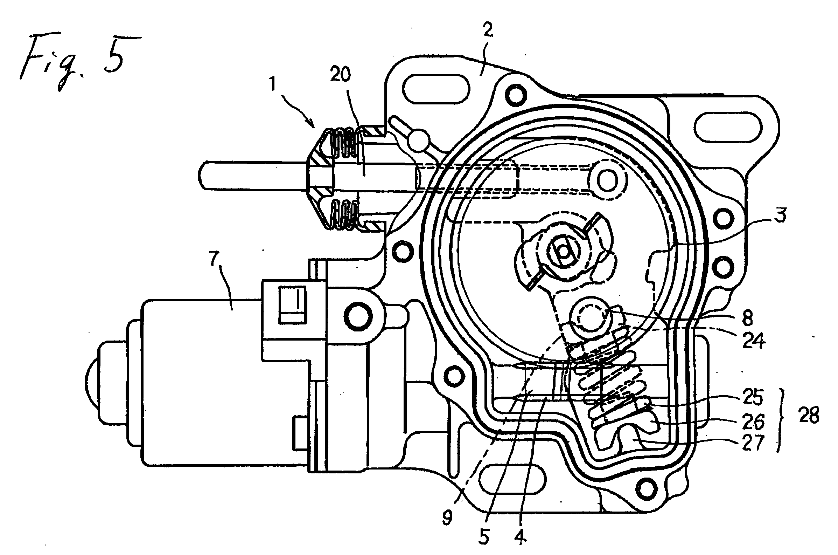

Fig. 5 shows a condition which the rotation of the worm wheel 3 is regulated. The pin 8 on the worm wheel 3 contacts with the stopper 9 through a sleeve 24 and the rotation of the worm wheel 3 is regulated. The stopper 9 Is formed on the wall of the housing 2 with a predetermined angle so that one face of the end portion of the sleeve 24 contacts therewith when the sleeve 24 swings by the pin 8. The pin 8 engages with the sleeve 24 at a concave portion of the sleeve 24. The sleeve 24 Is pushed by a coll spring 25 and is mounted. The coil spring 25 is disposed between the sleeve 24 and a sleeve 26 which has the same shape as the sleeve 24. The sleeve 26 is supported by a projection 27 formed on the housing 2. The sleeve 24, the spring 25, the sleeve 26 and the projection 27 constitute an urging device 28. The urging device 28 urges the worm wheel 3 counterclockwise in Fig. 1.

Next, operation of the motor driving device 1 is explained below.
The motor shaft 6 and the shaft 5 are rotated by the drive of the motor 7 and the worm wheel 3 is rotated by the gearing between the worm gear 4 and the worm wheel 3 while the rotational speed Is decreased. In this time, the force and the stroke which are outputs of the motor driving device 1 are transmitted through the connecting rod 20 connected to the pin 10 on the worm wheel 3. When the rotational angle of the worm wheel 3 Is regulated, as shown in Fig. 5, the pin 8 on the worm wheel 3 contacts with the stopper 9 on the housing 2 through the sleeve 24. However, due to the inertia of the motor shaft 6, the shaft 5 and the worm wheel 3, the rotation of the worm wheel 3 does not stop immediately and the worm wheel 3 further rotates. In this time, the shock force is applied to the gearing face 19 between the worm gear 4 and the worm wheel 3 and the worm gear 4 contacts strongly with the worm wheel 3. This force is transmitted to the shaft 5 and the shaft 5 is pushed strongly in the axial direction. Thereby, since the corn spring 12 or the corn spring 15 is bent by the bearings 13 or 16 and the shock force is absorbed, the shock force on the gearing face 19 is mitigated, As mentioned above, the shock force on the gearing face 19 between the worm gear 4 and the worm wheel 3 is mitigated and the regulation of the rotation of the worm wheel 3 can be performed without generating the gear lock.

The principles, preferred embodiments and mode of operation of the present Invention have been described In the foregoing specification. However, the invention which Is intended to be protected is not to be construed as limited to the particular embodiments disclosed. Further, the embodiments described herein is to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present Invention as defined In the claims, be embraced thereby.

A motor driving device includes a housing, a motor fixed to the housing, a shaft having a worm gear and driven by the motor, a worm wheel rotatably disposed in the housing and geared with the worm gear, an engaging member provided on a part of the worm wheel, a stopper for contacting to the engaging member when the worm wheel rotates with a predetermined angle and for regulating the rotation of the worm wheel and an absorbing member for absorbing a shock force In the axial direction of the shaft, wherein the shaft Is movable In the axial direction.

## Claims

1. A motor driving device comprising:
a housing;
a motor fixed to the housing;
a shaft having a worm gear and driven by the motor;
a worm wheel rotatably disposed in the housing and geared with the worm gear;
an engaging member provided on a part of the worm wheel;
a stopper for contacting to the engaging member when the worm wheel rotates with a predetermined angle and for regulating the rotation of the worm wheel; and
an absorbing member for absorbing a shock force In the axial direction of the shaft;
wherein the shaft is movable in the axial direction.

2. A motor driving device according to claim 1, wherein the absorbing member is disposed at both sides with respect to the worm gear.

3. A motor driving device according to claim 2, wherein the absorbing member is disposed at both ends of the shaft.

4. A motor driving device according to claims 1 or 3 further comprising a bearing for rotatably supporting the shaft, wherein the absorbing member is disposed adjacent to the bearing.

5. A motor driving device according to claims 1 or 4, wherein the absorbing member is a corn spring which urges the shaft in the axial direction.
